# EUROPEAN PATENT SPECIFICATION

(11) **EP 4 525 369 B1**
(45) Date of publication and mention of the grant of the patent: **02.12.2026**
(21) Application number: 24198061.4
(22) Date of filing: 03.09.2024
(51) Int. Cl.: H04L 9/40, G06F 3/12, H04W 12/06, H04W 12/55, H04W 12/73, H04W 84/12

(54) **INFORMATION PROCESSING APPARATUS, CONTROL METHOD, PROGRAM, AND NON-TRANSITORY COMPUTER-READABLE STORAGE MEDIUM STORING PROGRAM**
INFORMATIONSVERARBEITUNGSVORRICHTUNG, STEUERUNGSVERFAHREN, PROGRAMM UND NICHTFLÜCHTIGES COMPUTERLESBARES SPEICHERMEDIUM MIT DARAUF GESPEICHERTEM PROGRAMM
APPAREIL DE TRAITEMENT D'INFORMATIONS, PROCÉDÉ DE COMMANDE, PROGRAMME ET SUPPORT DE STOCKAGE LISIBLE PAR ORDINATEUR NON TRANSITOIRE STOCKANT UN PROGRAMME

(30) Priority: 12.09.2023 JP 2023147894
(43) Date of publication of application: 19.03.2025
(73) Proprietor: CANON KABUSHIKI KAISHA, Tokyo 146-8501 (JP)
(72) Inventor: TAKEUCHI, Takuya, Tokyo, 146-8501 (JP)
(74) Representative: TBK

(56) References cited:
- US-A1- 2022 264 446
- US-A1- 2023 057 920
- US-A1- 2023 135 980
- US-B1- 11 501 016
- ANONYMOUS: "Wi-Fi Password Manager MOD APK (Pro Unlocked) 1.0.65", APKMB.COM, 8 July 2023 (2023-07-08), pages 1 - 3, XP093244117, Retrieved from the Internet <URL:https://web.archive.org/web/20230708000727/https://apkmb.com/web/20230708000727/https://apkmb.com/wi-fi-password-manager-apk/#!/tu7n5TGpXE> [retrieved on 20250128]

## Description

### BACKGROUND OF THE INVENTION

### Field of the Invention

The present invention relates to an information processing apparatus for executing setting of connection to a communication apparatus, a control method, a program, and a non-transitory computer-readable storage medium storing a program.

### Description of the Related Art

As a method in which an information processing apparatus such as a smartphone is connected to a communication apparatus such as a network printer by a communication method such as wireless LAN communication, there is known a method of performing connection via an external apparatus such as a wireless LAN router. This connection method will be referred to as infrastructure connection hereinafter. The information processing apparatus and the communication apparatus can establish infrastructure connection to perform, for example, bidirectional communication, and can be connected to the Internet to use a service on the Internet. To establish infrastructure connection, it is known that the information processing apparatus transmits, to the communication apparatus, connection information such as a Service Set Identifier (to be referred to as a SSID hereinafter) and a password for connection to an external apparatus, and the communication apparatus executes connection setting for connection to the external apparatus based on the connection information.

Japanese Patent Laid-Open No. 2006-121342 describes a technique of generating a public key and a private key using biological information, acquiring biological information again when decoding data encrypted by the generated public key, and using it as a passphrase.

US 2022/264446 A1 discloses a control method that is achieved by a refrigerator application installed in portable terminal. The control method includes the steps of instructing an operating system of portable terminal to connect to a refrigerator in operation in a software access point mode, and sending a service set identifier (SSID) of an access point and a password for connecting to the access point to the refrigerator. An SSID of the refrigerator that operates in the software access point mode, and a password for connecting to the refrigerator that operates in the software access point mode are incorporated in the refrigerator application in advance.

US 2023/057920 A1 discloses an information processing system including a computer terminal and a peripheral device. The computer terminal includes a connection information storage unit configured to store first wireless connection information for connecting by wireless to a predetermined access point, and a connection request unit configured to request a wireless connection by using the first wireless connection information stored by the connection information storage unit. The peripheral device includes a wireless connection unit configured to establish a wireless connection by using second wireless connection information different from the first wireless connection information, and a connection information replacement unit configured to replace the second wireless connection information used by the wireless connection unit with the first wireless connection information.

### SUMMARY OF THE INVENTION

It is necessary to improve convenience by eliminating, with a simpler arrangement, erroneous input of information such as a complicated password by the user.

The present invention provides an information processing apparatus for improving convenience in connection setting processing using connection information, a control method, a program, and a non-transitory computer-readable storage medium storing a program.

The present invention is set out in the appended claims.

According to the present invention, it is possible to improve convenience in connection setting processing using connection information.

Further features of the present invention will become apparent from the following description of exemplary embodiments with reference to the attached drawings.

### BRIEF DESCRIPTION OF THE DRAWINGS

Fig. 1 is a block diagram showing the arrangement of a system including an information processing apparatus and a communication apparatus;
Fig. 2 is a view showing a state in which only the information processing apparatus is connected to an AP;
Fig. 3 is a view showing a screen displayed by the information processing apparatus;
Fig. 4 is a view showing a screen displayed by the information processing apparatus;
Fig. 5 is a view showing a screen displayed by the information processing apparatus;
Fig. 6 is a flowchart illustrating connection setting processing;
Figs. 7A and 7B are flowcharts illustrating connection setting processing; and
Fig. 8 is a view showing a screen displayed by an information processing apparatus.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made an invention that requires all such features, and multiple such features may be combined as appropriate. Furthermore, in the attached drawings, the same reference numerals are given to the same or similar configurations, and redundant description thereof is omitted.

### [First Embodiment]

An information processing apparatus 101 and a communication apparatus 151 included in a communication system according to this embodiment will be described. In this embodiment, a smartphone is exemplified as the information processing apparatus 101 but the present invention is not limited to this. For example, as the information processing apparatus 101, various kinds of apparatuses such as a portable terminal, a Personal Computer (PC), a tablet terminal, a Personal Digital Assistant (PDA), and a digital camera are applicable. Furthermore, a printer is exemplified as the communication apparatus 151 but the present invention is not limited to this, and various kinds of apparatuses are applicable as long as they can perform wireless communication with the information processing apparatus 101. For example, concerning a printer, an inkjet printer, a full-color laser beam printer, a monochrome printer, and the like are applicable. Furthermore, not only a printer but also a copying machine, a facsimile apparatus, a portable terminal, a smartphone, a laptop, a tablet terminal, a PDA, a digital camera, a music playback device, a television, a smart speaker, and the like are applicable. In addition, a multi-function peripheral having a plurality of functions such as a copying function, a FAX function, and a print function is applicable.

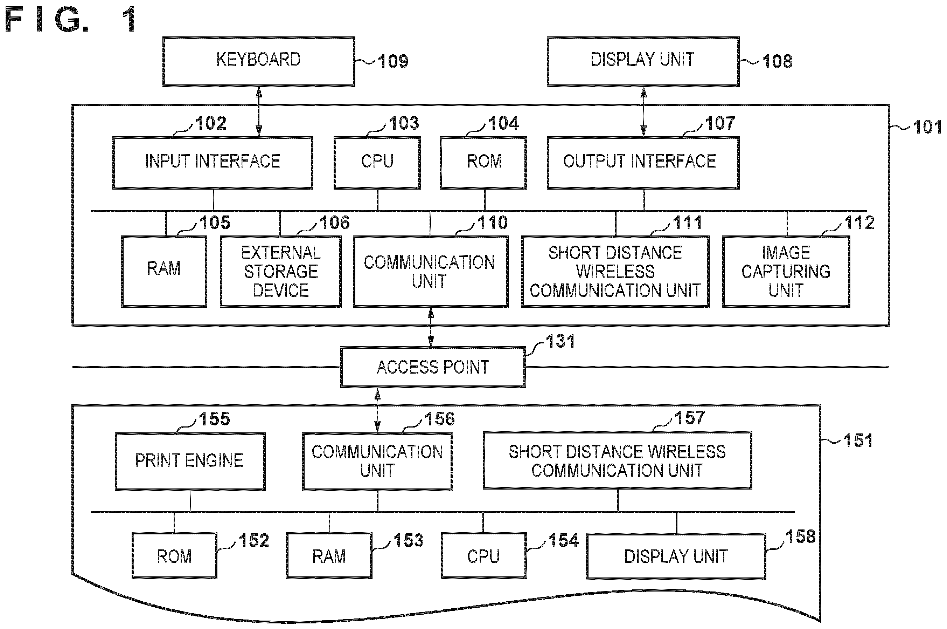

First, components of the information processing apparatus 101 of this embodiment and the communication apparatus 151 which can communicate with the information processing apparatus 101 of this embodiment will be described with reference to a block diagram shown in Fig. 1. Although this embodiment will exemplify the following components, the present invention is not limited to functions shown in Fig. 1. Apparatuses that are applicable to the information processing apparatus 101 and the communication apparatus 151 can appropriately include components corresponding to executable functions.

The information processing apparatus 101 includes an input interface 102, a CPU 103, a ROM 104, a RAM 105, an external storage device 106, an output interface 107, a display unit 108, a communication unit 110, a short distance wireless communication unit 111, and an image capturing unit 112. The CPU 103, the ROM 104, the RAM 105, and the like form a computer of the information processing apparatus 101 for executing a program.

The input interface 102 is an interface for accepting data input and instruction operations from the user when an operation unit such as a keyboard 109 is operated. Note that the operation unit may include a physical keyboard and physical buttons, or may include a software keyboard and software buttons displayed on the display unit 108. That is, the input interface 102 may accept input from the user via the display unit 108.

The CPU 103 is a system control unit and controls the whole information processing apparatus 101 such as execution of an application program. The ROM 104 stores permanent data such as control programs to be executed by the CPU 103, data tables, and an embedded operating system (to be referred to as an OS hereinafter) program. In this embodiment, the control programs stored in the ROM 104 perform software execution control such as scheduling, task switch, and interrupt processing under the management of the embedded OS stored in the ROM 104.

The RAM 105 is formed by a Static Random Access Memory (SRAM) or the like, which needs a backup power supply. Note that the RAM 105 can store important data such as program control variables without volatilization because the data are held by a primary battery (not shown) for data backup. In addition, a memory area for storing setting information of the information processing apparatus 101, management data of the information processing apparatus 101, and the like is also provided in the RAM 105. Furthermore, the RAM 105 is also used as the main memory and the work memory of the CPU 103.

The external storage device 106 stores an application program (setup application) configured to execute a network setup of the communication apparatus 151, a printer management application, a print information generation program that generates print information interpretable by the communication apparatus 151, and the like. Each program is stored in the external storage device 106 by being installed from an external server (not shown) by, for example, Internet communication via the communication unit 110. A service registration application is an application program configured to transmit information acquired from the communication apparatus 151, personal information of the user acquired by the information processing apparatus 101, and the like to a service management server (not shown). The application program (setting application) configured to execute a network setup of the communication apparatus 151 is an application program configured to set an access point as the connection destination of the communication apparatus 151. The printer management application is an application configured to manage information of the printer. Note that the service registration application, the setting application, the printer management application, and the print information generation program (print application) may be formed as one application.

The output interface 107 is an interface configured to perform control for causing the display unit 108 to display data or make a notification concerning the state of the information processing apparatus 101. The display unit 108 is formed by a Light-Emitting Diode (LED), a Liquid Crystal Display (LCD), or the like and displays data or makes a notification concerning the state of the information processing apparatus 101. The image capturing unit 112 is, for example, a camera that captures the outside.

The communication unit 110 is a component connected to the apparatus such as the communication apparatus 151 or an access point 131 to execute data communication. For example, the communication unit 110 can be connected to an access point (not shown) in the communication apparatus 151. The communication unit 110 includes, as an access point in the information processing apparatus 101, an access point for connection to the apparatus such as the communication apparatus 151. This access point is generally called tethering. Note that a communication unit 156 of the communication apparatus 151 can be connected to the access point. When the communication unit 110 enables the access point, the information processing apparatus 101 operates as the access point. When the communication unit 156 and the access point in the communication unit 110 are connected, the information processing apparatus 101 and the communication apparatus 151 can communicate with each other. If the communication unit 110 of the information processing apparatus 101 is connected to the Internet, the communication apparatus 151 can also be connected to the Internet via the information processing apparatus 101. Note that in this embodiment, the information processing apparatus 101 can communicate with the communication apparatus 151 via an external apparatus existing outside the information processing apparatus 101 and the communication apparatus 151. Note that examples of the external apparatus include an external access point (the access point 131 or the like) existing outside the information processing apparatus 101 and the communication apparatus 151, and an apparatus, other than the access point, that can relay communication. For example, a device such as a wireless LAN router is used as the access point 131. The method of connecting the information processing apparatus 101 and the communication apparatus 151 via the external access point is called an infrastructure connection method.

The short distance wireless communication unit 111 is a component wirelessly connected to the apparatus such as the communication apparatus 151 in a short distance to execute data communication, and performs communication by a communication method different from that of the communication unit 110. The short distance wireless communication unit 111 can be connected to a short distance wireless communication unit 157 in the communication apparatus 151. As the communication method, for example, Near Field Communication (NFC), Bluetooth^{®} Classic, Bluetooth Low Energy (BLE), a Wi-Fi Aware, or the like is used.

The communication apparatus 151 includes a ROM 152, a RAM 153, a CPU 154, a print engine 155, the communication unit 156, the short distance wireless communication unit 157, and a display unit 158. The ROM 152, the RAM 153, the CPU 154, and the like form a computer of the communication apparatus 151 for executing a program.

The communication unit 156 includes, as the access point in the communication apparatus 151, an access point for connection to the external apparatus such as the information processing apparatus 101. Note that the access point can be connected to the communication unit 110 of the information processing apparatus 101. If the communication unit 156 enables the access point, the communication apparatus 151 operates as the access point. Note that the communication unit 156 may directly, wirelessly be connected to the information processing apparatus 101 or may wirelessly be connected to the information processing apparatus 101 via the access point 131. The wireless communication method used by the communication unit 156 is, for example, a communication standard based on the IEEE 802.11 series. The communication unit 156 may include a hardware component functioning as an access point or may operate as an access point by software for functioning as an access point.

A mode and a connection method of executing wireless communication using the communication unit 156 will now be described.

### <Direct Connection Method>

Direct connection indicates a form in which apparatuses are wirelessly connected directly (that is, by Peer to Peer) without intervention of an external apparatus such as the AP 131. Direct connection is also called Peer to Peer connection (P2P connection). As one connection mode, the communication apparatus 151 can operate in a mode (direct connection mode) for communication by direct connection. In Wi-Fi communication, the mode for communication by direct connection includes a plurality of modes such as a software AP mode and a Wi-Fi Direct (WFD) mode.

A mode in which direct connection is executed by WFD is called a WFD mode. WFD is a standard developed by Wi-Fi Alliance and is a standard included in the IEEE 802.11 communication standards. In the WFD mode, a device serving as a communication partner is searched for by a device search command, then the roles of a P2P group owner (GO) and P2P client are decided, and remaining wireless connection processing is performed. The group owner corresponds to a Wi-Fi master station (master unit), and the client corresponds to a Wi-Fi slave station (slave unit). This role making corresponds to, for example, Go Negotiation in P2P. Note that in the WFD mode in a state before role making is performed, the communication apparatus 151 is neither the master station nor the slave station. More specifically, first, one of devices to communicate with each other issues a device search command and searches for a device to be connected in the WFD mode. After the other device serving as a communication partner is found, the devices confirm information about services and functions that can be supplied by the respective devices. Note that the device supply information confirmation is an option and is dispensable. The device supply information confirmation phase corresponds to, for example, P2P Provision Discovery. Then, the devices confirm the device supply information and decide, as roles, which device serves as a P2P client and which device serves as a P2P group owner. After the client and the group owner are decided, the devices exchange parameters for performing WFD communication. Based on the exchanged parameters, the P2P client and the P2P group owner perform remaining wireless connection processing and IP connection processing. Note that in the WFD mode, the communication apparatus 151 may always operate as the GO without executing the above-described GO Negotiation. That is, the communication apparatus 151 may operate in the WFD mode that is an Autonomous GO mode. The state in which the communication apparatus 151 operates in the WFD mode is, for example, a state in which WFD connection is not established but the communication apparatus 151 operates as the GO, or a state in which WFD connection is established and the communication apparatus 151 operates as the GO.

In the software AP mode, one device (for example, the information processing apparatus 101) among devices (for example, the information processing apparatus 101 and the communication apparatus 151) to communicate with each other serves as a client that plays a role of requesting various services. The other device implements the function of an access point in Wi-Fi by software setting. The software AP corresponds to a Wi-Fi master station, and the client corresponds to a Wi-Fi slave station. In the software AP mode, the client searches for a device serving as a software AP by a device search command. After the software AP is found, the client and the software AP perform remaining wireless connection processing (establishment of wireless connection and the like) and then IP connection processing (assignment of an IP address and the like). Note that commands and parameters transmitted/received when implementing wireless connection between the client and the software AP suffice to be those defined by the Wi-Fi standard, and a description thereof will be omitted here.

In this embodiment, in a case where the communication apparatus 151 establishes and maintains direct connection, it operates as a master station in a network to which the communication apparatus 151 belongs. Note that the master station is an apparatus that creates a wireless network, and is an apparatus that provides a slave station with parameters used in connection to the wireless network. The parameters used in connection to the wireless network are, for example, parameters about a channel used by the master station. The slave station receives the parameters and is then connected to the wireless network created by the master station using the channel used by the master station. In the direct connection mode, the communication apparatus 151 operates as the master station and can thus decide a specific frequency band and channel to be used for communication in the direct connection method. In this embodiment, the communication apparatus 151 can use a channel corresponding to the 2.4-GHz frequency band and a channel corresponding to the 5-GHz frequency band for communication in the direct connection method.

### <Infrastructure Connection Method>

Infrastructure connection is a connection form in which devices (for example, the information processing apparatus 101 and the communication apparatus 151) to communicate with each other are connected to an access point (for example, the AP 131) that controls a network of the devices, and the devices communicate with each other via the access point. As one connection mode, the communication apparatus 151 can operate in a mode (infrastructure connection mode) for communication by infrastructure connection.

In infrastructure connection, each device searches for an access point by a device search command. After an access point is found, the device and the access point perform remaining wireless connection processing (establishment of wireless connection and the like) and then IP connection processing (assignment of an IP address and the like). Note that commands and parameters transmitted/received when implementing wireless connection between the device and the access point suffice to be those defined by the Wi-Fi standard, and a description thereof will be omitted here.

In this embodiment, when the communication apparatus 151 operates in infrastructure connection, the AP 131 operates as a master station and the communication apparatus 151 operates as a slave unit. That is, in this embodiment, infrastructure connection means connection between the communication apparatus 151 operating as a slave unit and the apparatus operating as a master unit. In a case where the communication apparatus 151 establishes infrastructure connection and the information processing apparatus 101 also establishes infrastructure connection to the AP 131, the communication apparatus 151 and the information processing apparatus 101 can communicate with each other via the AP 131. Since the AP 131 decides a channel to be used for communication in infrastructure connection, the communication apparatus 151 executes communication in infrastructure connection using the channel decided by the AP 131. In this embodiment, the communication apparatus 151 can use a channel corresponding to the 2.4-GHz frequency band and a channel corresponding to the 5-GHz frequency band for communication in infrastructure connection. Note that the communication apparatus 151 can also use a channel corresponding to the DFS band in the 5-GHz frequency band for communication in infrastructure connection. Note also that to communicate with the communication apparatus 151 via the AP 131, the information processing apparatus 101 needs to recognize that the communication apparatus 151 belongs to a network which is formed by the AP 131 and to which the information processing apparatus 101 belongs.

In this embodiment, a state in which the information processing apparatus 101 and the communication apparatus 151 are simply connected to the same AP is considered as an infrastructure connection state. That is, in the infrastructure connection state, the information processing apparatus 101 and the communication apparatus 151 need only be connected to the same AP, and need not recognize that the partner apparatus belongs to the network to which the self-apparatus belongs.

### <Network Setup Mode>

The communication apparatus 151 can operate in the network setup mode. A trigger for the communication apparatus 151 to start an operation in the network setup mode may be, for example, the pressing of a network setup mode button by the user or activation (power-on) of the communication apparatus 151 for the first time after arrival. The network setup mode button may be a hardware (physical) button of the communication apparatus 151 or a software button displayed on the display unit 158 by the communication apparatus 151.

When the communication apparatus 151 starts an operation in the network setup mode, it enables Wi-Fi communication. More specifically, as Wi-Fi communication enabling processing, the communication apparatus 151 enables an internal AP (connection setting AP) of the communication apparatus 151 that is dedicated to the network setup mode. Then, the communication apparatus 151 can establish Wi-Fi direct connection to the information processing apparatus 101. Assume that connection information (Service Set Identifier (SSID) and password) for connection to the connection setting AP is held in advance in a setup application installed in the information processing apparatus 101, and the information processing apparatus 101 recognizes in advance the connection information for connection to the connection setting AP. Therefore, unlike connection information of an AP enabled in the direct connection mode, the connection information for connection to the connection setting AP cannot be changed arbitrarily by the user. Note that in the network setup mode, the communication apparatus 151 may be connected to the information processing apparatus 101 by not normal Wi-Fi but Wi-Fi Direct (WFD). That is, the communication apparatus 151 may operate as a group owner, and receive a setting command from the information processing apparatus 101 by WFD communication. Alternatively, the communication apparatus 151 may be connected to the information processing apparatus 101 by Bluetooth in the network setup mode. Bluetooth includes Bluetooth Classic and Bluetooth Low Energy (BLE). That is, for example, the communication apparatus 151 may operate as a slave apparatus in BLE in the network setup mode, and receive a setting command from the information processing apparatus 101 by BLE communication. Furthermore, in the network setup mode, the communication apparatus 151 may be able to execute both a network setup by Wi-Fi and a network setup by BLE. That is, when the communication apparatus 151 starts an operation in the network setup mode, it may enable both Wi-Fi communication and BLE communication. More specifically, when the communication apparatus 151 starts an operation in the network setup mode, it may enable both the connection setting AP and an advertising state in which BLE connection is enabled by transmitting advertising information by BLE.

When the communication apparatus 151 operates in the network setup mode, it controls the communication unit 156 to operate as a setup access point (connection setting AP) that is enabled only during an operation in the network setup mode. The setup access point is an access point different from that enabled in the above-described software AP mode. Assume that the SSID of the setup access point includes a predetermined character string recognizable by the setting application of the information processing apparatus 101.

Assume that the communication apparatus 151 operating in the network setup mode uses a predetermined communication protocol (setup communication protocol) in communication with the information processing apparatus 101 connected to the setup access point. More specifically, the setup communication protocol is, for example, Simple Network Management Protocol (SNMP).

If a predetermined time elapses after the communication apparatus 151 starts an operation in the network setup mode, the communication apparatus 151 stops the operation in the network setup mode and disables the setup access point. Furthermore, even when the connection information for connection to the AP 131 and a change instruction of the wireless communication operation mode are received from the information processing apparatus 101 in the network setup mode, the setup access point is disabled. Assume that the setup access point is an access point that does not require a password for connection. Note that the setup access point may be an access point that requires a password. In this case, a password used for connection to the setup access point is a fixed password (unchangeable by the user) that is grasped in advance by the setting application.

The communication unit 156 is assigned with a Media Access Control Address (MAC address). The MAC address is an identifier used to identify the communication unit, and is uniquely assigned to each communication unit in all the apparatuses including the communication apparatus and the information processing apparatus. Therefore, the MAC address is often used to identify the individual apparatus. In this embodiment, the identifier used to identify the apparatus will be referred to as apparatus identification information hereinafter. That is, the MAC address is an example of the apparatus identification information. In this embodiment, the MAC address is used as the apparatus identification information. However, the present invention is not limited to this. For example, a manufacturing number (serial number) assigned to the communication apparatus 151 may be used.

The short distance wireless communication unit 157 is a component wirelessly connected to the apparatus such as the information processing apparatus 101 in a short distance, and can be connected to, for example, the short distance wireless communication unit 111 in the information processing apparatus 101. As the communication method, for example, NFC, Bluetooth Classic, BLE, Wi-Fi Aware, or the like is used.

The RAM 153 is formed by an SRAM or the like, which needs a backup power supply. Note that the RAM 153 can store important data such as program control variables without volatilization because the data are held by a primary battery (not shown) for data backup. In addition, a memory area for storing setting information of the communication apparatus 151, management data of the communication apparatus 151, and the like is also provided in the RAM 153. Furthermore, the RAM 153 is used as the main memory and the work memory of the CPU 154 and a reception buffer to temporarily store print information received from the information processing apparatus 101 or the like or store various kinds of information.

The ROM 152 stores permanent data such as control programs to be executed by the CPU 154, data tables, and an OS program. In this embodiment, the control programs stored in the ROM 152 perform software execution control such as scheduling, task switch, and interrupt processing under the management of the embedded OS stored in the ROM 152. The ROM 152 also stores the serial number for identifying the communication apparatus 151. The serial number is uniquely assigned to identify the communication apparatus 151 by the manufacturer of the communication apparatus 151. The serial number can also be used as the apparatus identification information that can be used to identify the communication apparatus 151. In a case where the communication apparatus 151 is a printer, the use status and remaining amount of ink are collected from the print engine 155 and stored in the ROM 152. The CPU 154 is a system control unit and controls the whole communication apparatus 151.

Based on information stored in the RAM 153 or a print job received from the information processing apparatus 101 or the like, the print engine 155 forms an image on a print medium such as a paper sheet by applying a printing material such as ink onto the print medium, and outputs the print result. Note that in general, the data amount of the print job transmitted from the information processing apparatus 101 or the like is large, and thus it is necessary to use, for communication of the print job, a communication method that allows high-speed communication. Therefore, the communication apparatus 151 receives the print job via the communication unit 156 that can perform communication at a speed higher than that of the short distance wireless communication unit 157. The display unit 158 is, for example, a panel, and displays data or makes a notification concerning the state of the communication apparatus 151.

Note that a memory such as an external HDD or an SD card may be attached as an optional device to the communication apparatus 151, and information stored in the communication apparatus 151 may be stored in the memory.

After P2P connection or infrastructure connection by Wi-Fi is established between the information processing apparatus 101 and the communication apparatus 151 by connection setting processing in the above-described network setup mode, the information processing apparatus 101 and the communication apparatus 151 can communicate with each other via the established connection. More specifically, for example, the information processing apparatus 101 can transmit, to the communication apparatus 151 via the established connection, a print job for causing the communication apparatus 151 to execute printing or a scan job for causing the communication apparatus 151 to execute a scan.

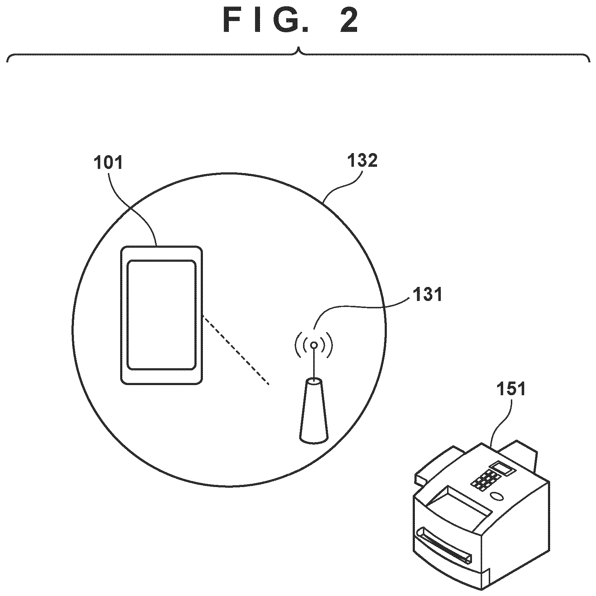

Fig. 2 shows a state in which only the information processing apparatus 101 is connected to the AP 131 in a network 132 created by the access point 131 in the infrastructure connection mode. The communication apparatus 151 is an apparatus that has not joined the network 132 yet, and needs to undergo connection setting processing for joining the network 132. This embodiment assumes, for example, a case where authentication processing using a password is necessary in this connection setting processing. If, when manually inputting the password, the user inputs an incorrect password, the connection setting processing fails, and is re-executed. Therefore, it is important to prevent erroneous input of the password.

In this embodiment, the setup application operating on the information processing apparatus 101 performs guidance display of the use of the password copy function of the AP that is the function of the OS. Then, the setup application causes the information processing apparatus 101 to execute the connection setting processing using a password acquired by the password copy function.

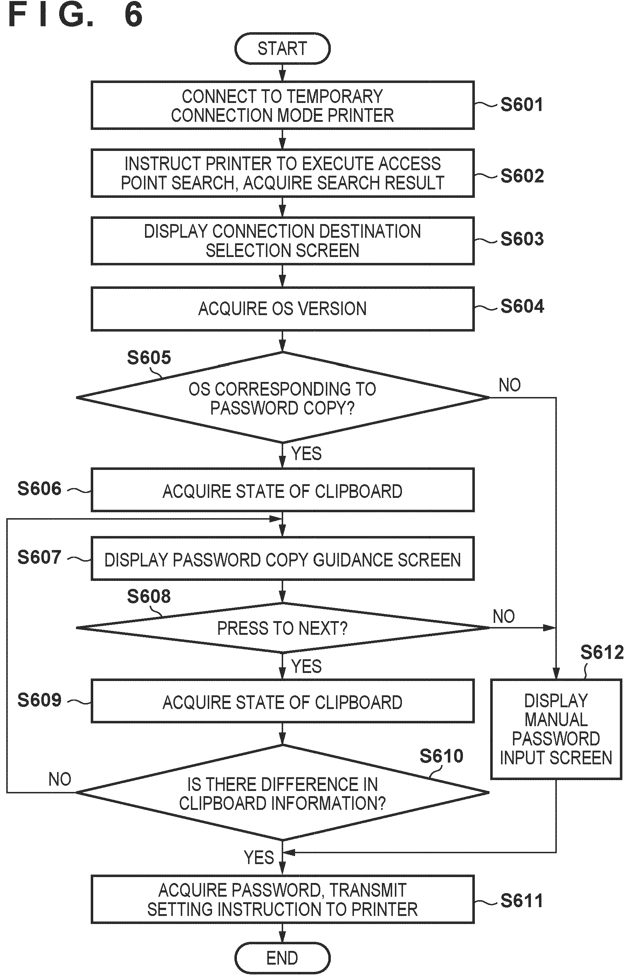

Fig. 6 is a flowchart illustrating the connection setting processing of the setup application operating on the information processing apparatus 101. The processing shown in Fig. 6 is implemented when, for example, the CPU 103 of the information processing apparatus 101 reads out the program stored in the ROM 104 into the RAM 105 and executes it. The processing shown in Fig. 6 is started when, for example, the setup application is activated in the information processing apparatus 101 and accepts a user instruction of a network setup.

In step S601, the CPU 103 performs connection to the communication apparatus 151 in the network setup mode. The network setup mode is a mode in which the communication apparatus 151 operates as the setup AP using a predetermined SSID and password. The communication apparatus 151 may automatically be activated as the setup AP at the time of an initial setup (at the time of arrival or the like). In this embodiment, the communication apparatus 151 automatically operates as the setup AP at the time of an initial setup. However, the user may perform an operation on the main body panel of the communication apparatus 151 or a main body button operation to cause the communication apparatus 151 to operate in the network setup mode. The CPU 103 detects the predetermined SSID to perform connection to the communication apparatus 151 in the network setup mode.

In step S602, the CPU 103 transmits an instruction to execute a search for an access point around the communication apparatus 151 connected in step S601. Then, the CPU 103 acquires a search result list of access points from the communication apparatus 151. Note that the acquired list is a list of one or a plurality of access points which are found by executing an AP search by the communication apparatus 151 and to which the communication apparatus 151 is connectable. For example, the instruction to execute a search for an access point is executed by designating Management Information Base (MIB) for access point execution instruction using a communication protocol of Simple Network Management Protocol (SNMP). The processing of acquiring the search result list of the access points is also executed by SNMP an MIB from the information processing apparatus 101 to the communication apparatus 151. Note that SNMP and MIB are used in this embodiment but another communication protocol and another data format may be used.

In step S603, the CPU 103 displays, on the display unit 108, a connection destination selection screen for accepting selection of a setting target access point.

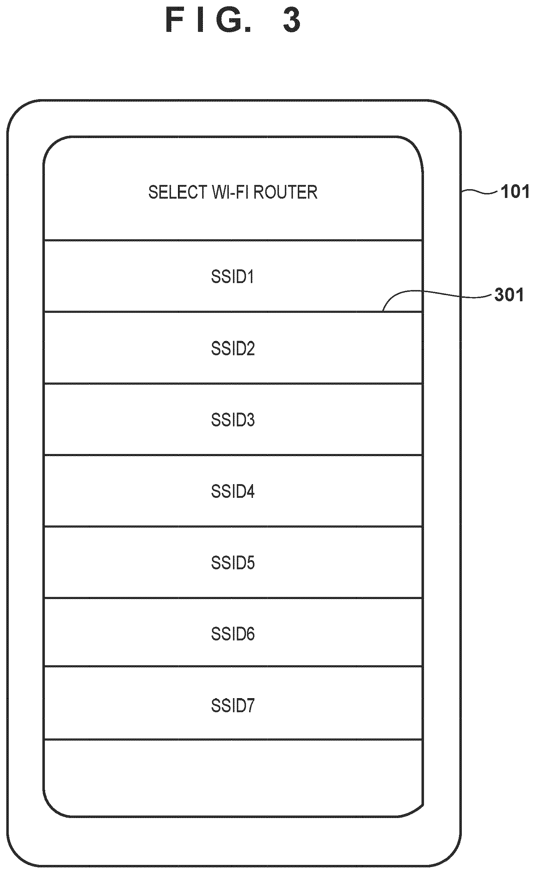

Fig. 3 is a view showing an example of the connection destination selection screen. The connection destination selection screen shown in Fig. 3 is a screen displayed on the display unit 108 of the information processing apparatus 101. A list 301 is a list of access points, and the CPU 103 displays the access point list acquired in step S602, and accepts selection of an SSID from the user. This embodiment will exemplify a case where SSID1 is selected.

If the user selects an SSID on the connection destination selection screen, the CPU 103 acquires, in step S604, the version information of the OS using the Application Program Interface (API) of the OS. In step S605, the CPU 103 determines whether the acquired OS version is an OS version supporting the password copy function. In this embodiment, as an example, assume that iOS 16 (a predetermined version) or higher supports the password copy function. The password copy function indicates a function of selecting a desired SSID on the system screen of the OS which is a screen for executing the Wi-Fi setting function of iOS, and copying the password. A password having undergone a copy operation is saved in a clipboard as a save area for temporarily saving data. Note that the system screen of the OS is a screen displayed by the system setting application of OS standard. The system setting application of OS standard is an application having a function of controlling wireless connection between the information processing apparatus 101 and another apparatus. More specifically, the system setting application of OS standard has a function of establishing Wi-Fi connection between the information processing apparatus 101 and the access point and a function of managing various kinds of information concerning the Wi-Fi connection between the information processing apparatus 101 and the access point. The various kinds of information concerning the Wi-Fi connection include, for example, the SSID, password, encryption method, authentication method, and the like of the access point to which the information processing apparatus 101 is connected by Wi-Fi. In this embodiment, the system setting application of OS standard can display various kinds of information concerning the Wi-Fi connection by accepting an operation from the user. The information processing apparatus 101 including an OS that supports the password copy function and whose version is equal to or higher than the predetermined version can copy the password displayed, as described above, on the system screen of the OS and save the password in the clipboard. However, the information processing apparatus 101 including an OS that does not support the password copy function and whose version is lower than the predetermined version cannot copy the password displayed, as described above, on the system screen of the OS and save the password in the clipboard. Therefore, if it is determined in step S605 that the OS version is not a version supporting the password copy function, the CPU 103 advances to step S612, and displays a password input screen on the display unit 108.

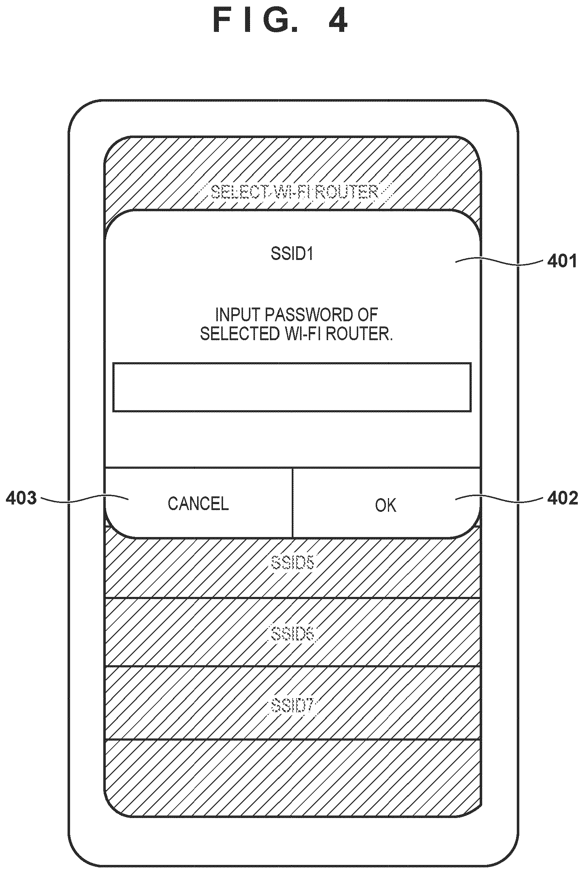

Fig. 4 is a view showing an example of the password input screen. The password input screen is a screen displayed on the display unit 108 of the information processing apparatus 101. The password input screen includes display of SSID1 as the SSID information selected by the user, a display area 401 including a text field for accepting a password input, an OK button 402, and a cancel button 403. Upon accepting the password input and the pressing of the OK button 402 from the user, the process advances to step S611. Alternatively, upon accepting the pressing of the cancel button 403 from the user, the processing shown in Fig. 6 ends.

If it is determined in step S605 that the OS version is a version supporting the password copy function, the process advances to step S606. In step S606, the CPU 103 acquires, using the API of the OS, the state of the clipboard as an area that temporarily saves the data when a copy operation is performed on the information processing apparatus 101. That is, state acquisition processing of acquiring the state of the clipboard before displaying a guidance screen to the user is performed.

In step S607, the CPU 103 displays the guidance screen for prompting the user to use the password copy function.

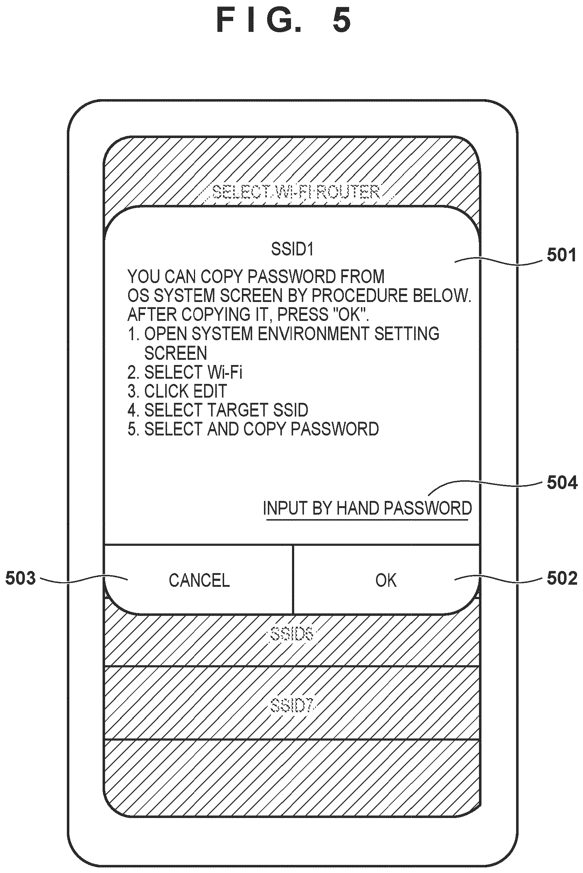

Fig. 5 is a view showing an example of the guidance screen. The guidance screen is a screen displayed on the display unit 108 of the information processing apparatus 101. The guidance screen includes an explanation of copying of the password from the system screen of the OS, an area 501 where a link 504 for switching to manual password input is displayed, an OK button 502, and a cancel button 503. More specifically, on the guidance screen, a message for prompting the user to activate the system setting application of OS standard can be displayed. This message corresponds to a message for prompting the user to open (display) the system screen of the OS. On the guidance screen, a message for explaining an operation method that causes the system setting application of OS standard to display various kinds of information concerning the Wi-Fi connection and that is performed on the screen displayed by the system setting application of OS standard can be displayed. On the guidance screen, after causing the system setting application of OS standard to display various kinds of information concerning the Wi-Fi connection, a message for prompting the user to copy the password of the access point can be displayed. When the password of the access point is copied by executing, by the user, the operation promoted by the guidance, the copied password is saved in the clipboard. Note that when the link 504 is pressed, the process returns to the processing of displaying the screen shown in Fig. 4. Furthermore, the guidance screen may include a button for displaying the system screen of the OS. Then, upon the pressing of the button, the CPU 103 may activate the system setting application of OS standard, and cause the system setting application of OS standard to display the screen.

In step S608, the CPU 103 causes the process to branch in accordance with the user operation accepted on the guidance screen. That is, if the pressing of the OK button 502 is accepted on the guidance screen, the process advances to step S609. If the pressing of the cancel button 503 is accepted on the guidance screen, the process advances to step S612, and the CPU 103 displays the password input screen shown in Fig. 4 on the display unit 108.

In step S609, the CPU 103 acquires the information in the clipboard using the API of the OS. That is, state acquisition processing of acquiring the state of the clipboard after displaying the guidance screen to the user is performed. In step S610, the CPU 103 determines whether there is a difference between the clipboard information acquired in step S606 and that acquired in step S609. If it is determined that there is a difference, the process advances to step S611. On the other hand, if it is determined that there is no difference, the processes from step S607 are repeated.

As described above, according to this embodiment, if the information saved in the clipboard changes, it is determined that the user executes the password copy function in accordance with the guidance. Therefore, the processes of steps S606 to S610 can indicate processing for determining whether the password copy function is executed.

If the process advances from step S610 to step S611, the CPU 103 acquires, from the clipboard, the password information copied by the user by the operation displayed on the guidance screen, and transmits the password information as connection setting information of the network setup to the communication apparatus 151. The connection setting information is transmitted using, for example, SNMP and MIB.

As described above, according to this embodiment, it is possible to prevent the user from erroneously inputting a password. In addition, for example, the user need not go to see a password or the like attached to the back surface of a router or the like. As a result, it is possible to improve convenience in a network setup.

### [Second Embodiment]

The second embodiment will be described below concerning points different from the first embodiment. In this embodiment, as an example of a network setup, when a network setup in an information processing apparatus 101 fails, the user is prompted again to perform a setup (reconnection setting) using a password copy function.

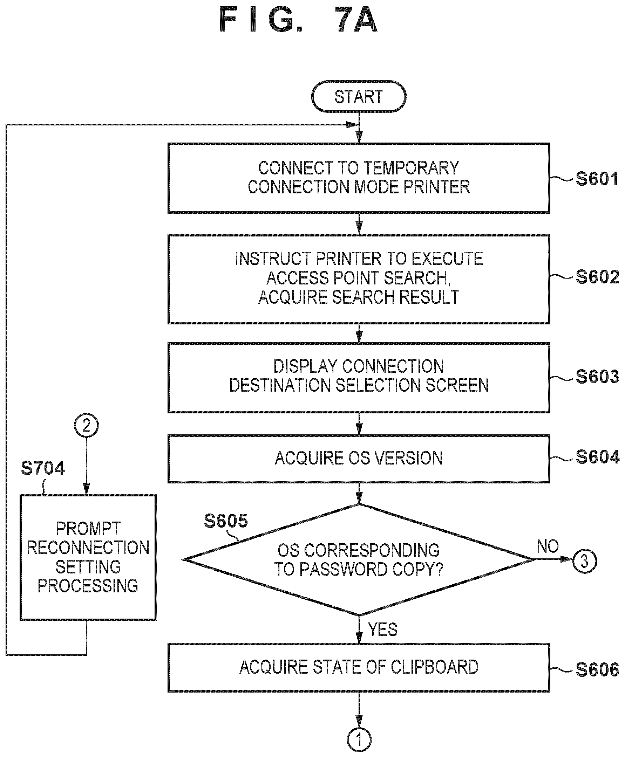

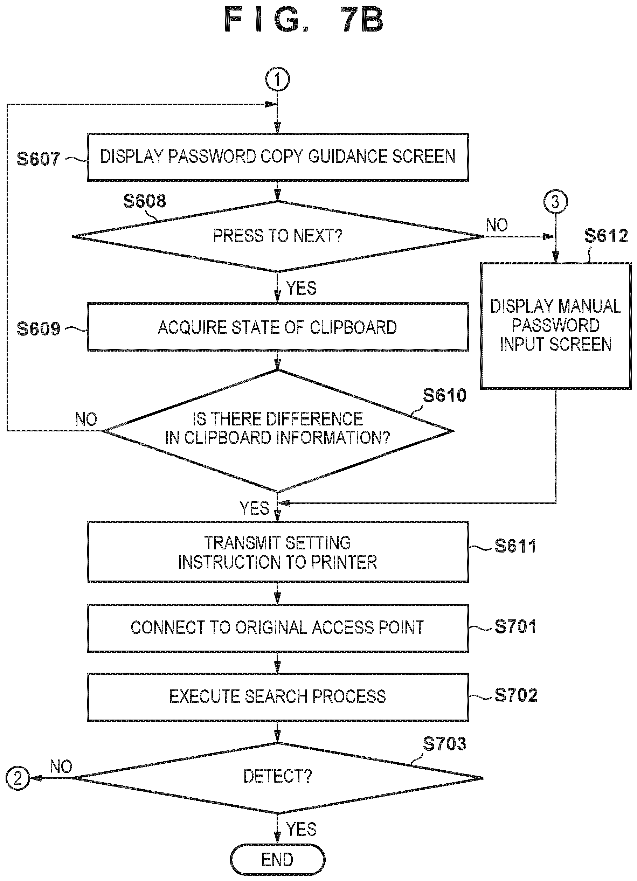

Figs. 7A and 7B are flowcharts illustrating processing of a setup application operating on the information processing apparatus 101 according to this embodiment. The processing shown in Figs. 7A and 7B is implemented when, for example, a CPU 103 of the information processing apparatus 101 reads out a program stored in a ROM 104 into a RAM 105 and executes it. The processing shown in Figs. 7A and 7B is started when, for example, the setup application is activated in the information processing apparatus 101 and accepts a user instruction of a network setup. Steps S601 to S611 of Figs. 7A and 7B are the same as in Fig. 6 and a description thereof will be omitted.

After connection setting information is transmitted to a communication apparatus 151 in step S611, the CPU 103 returns connection to an access point 131 in step S701. In step S702, the CPU 103 performs search processing of the communication apparatus 151 in the network of the access point 131. The search processing is performed using, for example, SNMP and MIB. For example, the information processing apparatus 101 transmits a search packet onto the network of the access point 131 by broadcast, and confirms, for a predetermined time, whether a response is returned. Note that the example of using SNMP and MIB has been explained but another communication protocol and another data format may be used.

In step S703, the CPU 103 determines whether the communication apparatus 151 is detected. If it is determined that the communication apparatus 151 is detected, the processing shown in Figs. 7A and 7B ends. After that, communication between the information processing apparatus 101 and the communication apparatus 151 is performed via the access point 131. On the other hand, if it is determined that the communication apparatus 151 is not detected, the process advances to step S704. In step S704, the CPU 103 displays a guidance screen for prompting the user to perform reconnection setting processing.

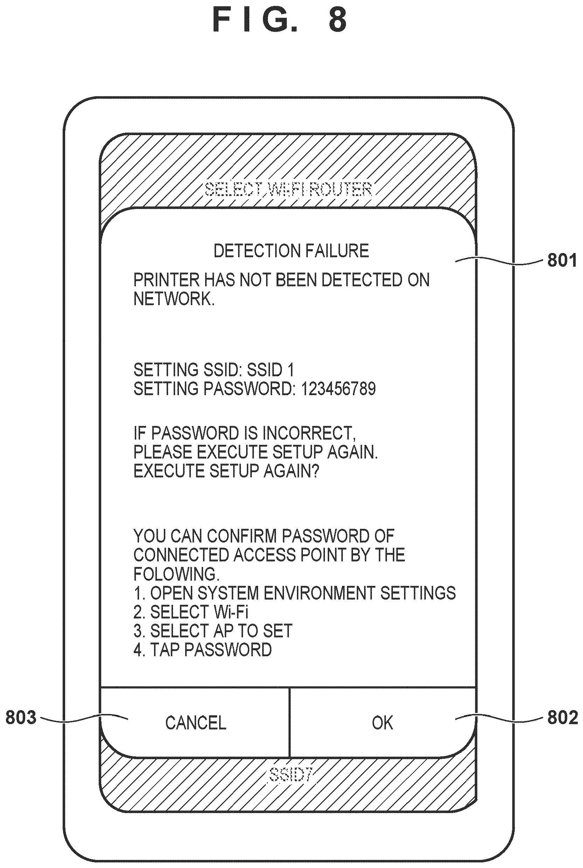

Fig. 8 is a view showing an example of the guidance screen for prompting the user to perform the reconnection setting processing. Fig. 8 shows a screen displayed on a display unit 108 of the information processing apparatus 101. The guidance screen for prompting the user to perform the reconnection setting processing includes an area 801 where information representing a setting failure and a message for prompting the user to confirm the password are displayed, an OK button 802, and a cancel button 803. Upon accepting the pressing of the OK button 802, the processes from step S601 are repeated. Upon accepting the pressing of the cancel button 803, the processing shown in Figs. 7A and 7B ends.

As described above, according to this embodiment, even if, as a result of a network setup, connection to an access point corresponding to a selected SSID has failed and the user is prompted to perform reconnection setting processing, it is possible to prompt the user to perform a setup again using the password copy function of the OS. This can prevent the user from erroneously inputting the password, and improve convenience in a network setup.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A control method for an information processing apparatus (101) including a predetermined application program, comprising:
performing, by the predetermined application program, control to display a guidance indicating an operation method for saving, in a clipboard, a password that is managed by another application program different from the predetermined application program and is a password for connecting to an access point outside the information processing apparatus (101); and
performing, by the predetermined application program, control to transmit to a communication apparatus (151) outside the information processing apparatus (101), setting information, including an acquired password, for connection to an access point outside the information processing apparatus (101), after the guidance is displayed.

2. The method according to claim 1, further comprising performing, by the predetermined application program, control to determine whether an operating system of the information processing apparatus (101) is an operating system supporting a function of saving, in the clipboard, a password that is managed by the another application program and is a password for connecting to an access point outside the information processing apparatus (101),
wherein based on a fact that the operating system of the information processing apparatus (101) is the operating system supporting the function of saving, the guidance is displayed by the predetermined application program.

3. The method according to claim 2, wherein based on a fact that the operating system of the information processing apparatus (101) is not the operating system supporting the function of saving, control is executed so the guidance is not displayed by the predetermined application program.

4. The method according to claim 3, wherein based on the fact that the operating system of the information processing apparatus (101) is not the operating system supporting the function of saving, control is executed so that an input screen for accepting a password input from the user is displayed by the predetermined application program without displaying the guidance by the predetermined application program.

5. The method according to claim 2, wherein the operating system supporting the function of saving is iOS whose version is not lower than iOS 16.

6. The method according to claim 1, further comprising performing, by the predetermined application program, control to accept, from the user, selection of one access point from a plurality of access points,
wherein in a case where the selection is accepted from the user, the guidance is displayed, and
the setting information transmitted to the communication apparatus (151) is information for connection to the selected access point.

7. The method according to claim 6, further comprising performing, by the predetermined application program, control to acquire, from the communication apparatus (151), information of a list of the access points found by a search executed by the communication apparatus (151),
wherein the selection is selection of one access point from the list of the access points found by the search executed by the communication apparatus (151).

8. The method according to claim 1, wherein based on a fact that the user executes a predetermined operation after the guidance is displayed, control is executed so that an input screen for accepting a password input from the user is displayed by the predetermined application program.

9. The method according to claim 1, further comprising performing, by the predetermined application program, control to acquire a password that is managed by the another application program and is a password for connecting to an access point outside the information processing apparatus (101), saved in the clipboard after the guidance is displayed,
wherein the setting information transmitted to the communication apparatus (151) includes the acquired password.

10. The method according to claim 9, wherein based on a fact that a password, that is managed by the another application program and is a password for connecting to an access point outside the information processing apparatus (101), is saved in the clipboard by the function of saving after the guidance is displayed, a password saved in the clipboard is acquired.

11. The method according to claim 9, wherein based on a fact that there is a difference between a state of the clipboard at a first timing and a state of the clipboard at a second timing after the first timing and after the guidance is displayed, a password saved in the clipboard is acquired.

12. The method according to claim 11, wherein the first timing is a timing before the guidance is displayed.

13. The method according to any one of claims 1 to 12, wherein the guidance is a screen for displaying the operation method for executing the function of saving that is executed on a screen displayed by the other application program.

14. The method according to any one of claims 1 to 13, wherein the guidance includes a button for activating the other application program.

15. The method according to any one of claims 1 to 14, further comprising:
performing, by the predetermined application program, control to establish connection between the access point and the information processing apparatus (101) after the setting information is transmitted to the communication apparatus (151);
performing, by the predetermined application program, control to search for the communication apparatus (151) on a network of the access point; and
performing, by the predetermined application program, control to display, based on a fact that the communication apparatus (151) is not found on the network of the access point, a screen corresponding to the fact that the communication apparatus (151) is not found on the network of the access point.

16. The method according to claim 15, wherein the screen corresponding to the fact that the communication apparatus (151) is not found on the network of the access point includes an area for prompting the user to execute the function of saving.

17. The method according to any one of claims 1 to 16, further comprising performing, by the predetermined application program, control to transmit, to the communication apparatus (151), one of a print job for causing the communication apparatus (151) to execute printing and a scan job for causing the communication apparatus (151) to execute a scan, by communication between the information processing apparatus (101) and the communication apparatus (151) via the connection established by transmitting the setting information.

18. The method according to any one of claims 1 to 17, wherein the other application program is a system setting application program of operating system standard of the information processing apparatus (101).

19. The method according to any one of claims 1 to 18, wherein, in a case where a password saved in the clipboard is acquired, the setting information including the acquired password is transmitted to the communication apparatus (151) outside the information processing apparatus (101).

20. The method according to any one of claims 1 to 19, further comprising performing, by the predetermined application program, control to display a text field for accepting input of a password from a user by the predetermined application program,
wherein the setting information including a password input in the text field is transmitted to the communication apparatus (151) outside the information processing apparatus.

21. An information processing apparatus (101) including a predetermined application program, comprising:
display control means (107) configured to perform, by the predetermined application program, control to display a guidance indicating an operation method for saving, in a clipboard, a password that is managed by another application program different from the predetermined application program and is a password for connecting to an access point outside the information processing apparatus (101); and
transmission control means (103) configured to perform, by the predetermined application program, control to transmit to a communication apparatus (151) outside the information processing apparatus (101), setting information, including an acquired password, for connection to an access point outside the information processing apparatus (101), after the guidance is displayed.

22. A predetermined application program including instructions, which when executed by one or more processors of an information processing apparatus (101), cause the information processing apparatus (101) to perform the method of claim 1.

23. A non-transitory computer-readable storage medium that stores a predetermined application program including instructions, which when executed by one or more processors of an information processing apparatus (101), cause the information processing apparatus (101) to perform the method of claim 1.

## Patentansprüche

1. Steuerverfahren für eine Informationsverarbeitungsvorrichtung (101), die ein vorbestimmtes Anwendungsprogramm enthält, mit:
Durchführen einer Steuerung durch das vorbestimmte Anwendungsprogramm zum Anzeigen einer Führung, die ein Bedienverfahren zum Sichern eines Passworts in einem Clipboard angibt, wobei das Passwort durch ein von dem vorbestimmten Anwendungsprogramm verschiedenes anderes Anwendungsprogramm verwaltet wird und ein Passwort zum Verwenden mit einem Zugangspunkt außerhalb der Informationsverarbeitungsvorrichtung (101) ist, und
Durchführen einer Steuerung durch das vorbestimmte Anwendungsprogramm zum Übertragen von Einstellungsinformationen, die ein beschafftes Passwort enthalten, zum Verbinden mit einem Zugangspunkt außerhalb der Informationsverarbeitungsvorrichtung (101) zu einer Kommunikationsvorrichtung (151) außerhalb der Informationsverarbeitungsvorrichtung (101), nachdem die Führung angezeigt wird.

2. Verfahren nach Anspruch 1, ferner mit Durchführen einer Steuerung durch das vorbestimmte Anwendungsprogramm zum Bestimmen, ob ein Betriebssystem der Informationsverarbeitungsvorrichtung (101) ein Betriebssystem ist, das eine Funktion eines Sicherns eines Passworts in dem Clipboard unterstützt, wobei das Passwort durch das andere Anwendungsprogramm verwaltet wird und ein Passwort zum Verbinden mit einem Zugangspunkt außerhalb der Informationsverarbeitungsvorrichtung (101) ist,
wobei beruhend auf einer Tatsache, dass das Betriebssystem der Informationsverarbeitungsvorrichtung (101) das Betriebssystem ist, das die Funktion des Sicherns unterstützt, die Führung durch das vorbestimmte Anwendungsprogramm angezeigt wird.

3. Verfahren nach Anspruch 2, wobei beruhend auf einer Tatsache, dass das Betriebssystem der Informationsverarbeitungsvorrichtung (101) nicht das Betriebssystem ist, das die Funktion des Sicherns unterstützt, eine Steuerung ausgeführt wird, sodass die Führung durch das vorbestimmte Anwendungsprogramm nicht angezeigt wird.

4. Verfahren nach Anspruch 3, wobei beruhend auf der Tatsache, dass das Betriebssystem der Informationsverarbeitungsvorrichtung (101) nicht das Betriebssystem ist, das die Funktion des Sicherns unterstützt, eine Steuerung ausgeführt wird, sodass ein Eingabebildschirm zum Annehmen eines vom Benutzer eingegebenen Passworts durch das vorbestimmte Anwendungsprogramm ohne Anzeigen der Führung durch das vorbestimmte Anwendungsprogramm angezeigt wird.

5. Verfahren nach Anspruch 2, wobei das die Funktion des Sicherns unterstützende Betriebssystem iOS ist, dessen Version nicht älter als iOS 16 ist.

6. Verfahren nach Anspruch 1, ferner mit Durchführen einer Steuerung durch das vorbestimmte Anwendungsprogramm zum Annehmen einer Auswahl eines Zugangspunkts aus einer Vielzahl von Zugangspunkten von dem Benutzer,
wobei in einem Fall, in dem die Auswahl vom Benutzer angenommen wird, die Führung angezeigt wird, und
die zu der Kommunikationsvorrichtung (151) übertragenen Einstellungsinformationen Informationen zum Verbinden mit dem ausgewählten Zugangspunkt sind.

7. Verfahren nach Anspruch 6, ferner mit Durchführen einer Steuerung durch das vorbestimmte Anwendungsprogramm zum Beschaffen von Informationen einer Liste der Zugangspunkte von der Kommunikationsvorrichtung (151), die durch eine durch die Kommunikationsvorrichtung (151) ausgeführte Suche gefunden werden,
wobei die Auswahl eine Auswahl eines Zugangspunkts aus der Liste der Zugangspunkte ist, die durch die durch die Kommunikationsvorrichtung (151) ausgeführte Suche gefunden werden.

8. Verfahren nach Anspruch 1, wobei beruhend auf einer Tatsache, dass der Benutzer eine vorbestimmte Bedienung ausführt, nachdem die Führung angezeigt wird, eine Steuerung ausgeführt wird, sodass ein Eingabebildschirm zum Annehmen eines vom Benutzer eingegebenen Passworts durch das vorbestimmte Anwendungsprogramm angezeigt wird.

9. Verfahren nach Anspruch 1, ferner mit Durchführen einer Steuerung durch das vorbestimmte Anwendungsprogramm zum Beschaffen eines Passworts, das durch das andere Anwendungsprogramm verwaltet wird und ein Passwort zum Verbinden mit einem Zugangspunkt außerhalb der Informationsverarbeitungsvorrichtung (101) ist, das in dem Clipboard gesichert ist, nachdem die Führung angezeigt wird,
wobei die zu der Kommunikationsvorrichtung (151) übertragenen Einstellungsinformationen das beschaffte Passwort enthalten.

10. Verfahren nach Anspruch 9, wobei beruhend auf einer Tatsache, dass ein Passwort, das durch das andere Anwendungsprogramm verwaltet wird und ein Passwort zum Verbinden mit einem Zugangspunkt außerhalb der Informationsverarbeitungsvorrichtung (101) ist, durch die Funktion des Sicherns, nachdem die Führung angezeigt wird, in dem Clipboard gesichert wird, ein in dem Clipboard gesichertes Passwort beschafft wird.

11. Verfahren nach Anspruch 9, wobei beruhend auf einer Tatsache, dass es einen Unterschied zwischen einem Zustand des Clipboards zu einem ersten Zeitpunkt und einem Zustand des Clipboards zu einem zweiten Zeitpunkt nach dem ersten Zeitpunkt und nachdem die Führung angezeigt wird, gibt, ein in dem Clipboard gesichertes Passwort beschafft wird.

12. Verfahren nach Anspruch 11, wobei der erste Zeitpunkt ein Zeitpunkt ist, bevor die Führung angezeigt wird.

13. Verfahren nach einem der Ansprüche 1 bis 12, wobei die Führung ein Bildschirm zum Anzeigen des Bedienverfahrens zum Ausführen der Funktion des Sicherns ist, die auf einem durch das andere Anwendungsprogramm angezeigten Bildschirm ausgeführt wird.

14. Verfahren nach einem der Ansprüche 1 bis 13, wobei die Führung eine Schaltfläche zum Aktivieren des anderen Anwendungsprogramms enthält.

15. Verfahren nach einem der Ansprüche 1 bis 14, ferner mit:
Durchführen einer Steuerung durch das vorbestimmte Anwendungsprogramm zum Errichten einer Verbindung zwischen dem Zugangspunkt und der Informationsverarbeitungsvorrichtung (101), nachdem die Einstellungsinformationen zu der Kommunikationsvorrichtung (151) übertragen wurden,
Durchführen einer Steuerung durch das vorbestimmte Anwendungsprogramm zum Suchen nach der Kommunikationsvorrichtung (151) in einem Netzwerk des Zugangspunkts, und
Durchführen einer Steuerung durch das vorbestimmte Anwendungsprogramm zum Anzeigen eines Bildschirms beruhend auf einer Tatsache, dass die Kommunikationsvorrichtung (151) im Netzwerk des Zugangspunkts nicht gefunden wird, wobei der Bildschirm der Tatsache entspricht, dass die Kommunikationsvorrichtung (151) im Netzwerk des Zugangspunkts nicht gefunden wird.

16. Verfahren nach Anspruch 15, wobei der Bildschirm, der der Tatsache entspricht, dass die Kommunikationsvorrichtung (151) im Netzwerk des Zugangspunkts nicht gefunden wird, einen Bereich zum Auffordern des Benutzers, die Funktion des Sicherns auszuführen, enthält.

17. Verfahren nach einem der Ansprüche 1 bis 16, ferner mit Durchführen einer Steuerung durch das vorbestimmte Anwendungsprogramm zum Übertragen eines Druckauftrags zum Veranlassen der Kommunikationsvorrichtung (151), ein Drucken auszuführen, oder eines Scanauftrags zum Veranlassen der Kommunikationsvorrichtung (151), ein Scannen auszuführen, zu der Kommunikationsvorrichtung (151) durch eine Kommunikation zwischen der Informationsverarbeitungsvorrichtung (101) und der Kommunikationsvorrichtung (151) über die durch das Übertragen der Einstellungsinformationen errichtete Verbindung.

18. Verfahren nach einem der Ansprüche 1 bis 17, wobei das andere Anwendungsprogramm ein Systemeinstellungsanwendungsprogramm eines Betriebssystemstandards der Informationsverarbeitungsvorrichtung (101) ist.

19. Verfahren nach einem der Ansprüche 1 bis 18, wobei in einem Fall, in dem ein in dem Clipboard gesichertes Passwort beschafft wird, die das beschaffte Passwort enthaltenden Einstellungsinformationen zu der Kommunikationsvorrichtung (151) außerhalb der Informationsverarbeitungsvorrichtung (101) übertragen werden.

20. Verfahren nach einem der Ansprüche 1 bis 19, ferner mit Durchführen einer Steuerung durch das vorbestimmte Anwendungsprogramm zum Anzeigen eines Textfeldes zum Annehmen einer Eingabe eines Passworts von einem Benutzer durch das vorbestimmte Anwendungsprogramm,
wobei die Einstellungsinformationen, die ein in das Textfeld eingegebenes Passwort enthalten, zu der Kommunikationsvorrichtung (151) außerhalb der Informationsverarbeitungsvorrichtung übertragen werden.

21. Informationsverarbeitungsvorrichtung (101), die ein vorbestimmtes Anwendungsprogramm enthält, mit:
einer Anzeigesteuereinrichtung (107), die eingerichtet ist, durch das vorbestimmte Anwendungsprogramm eine Steuerung zum Anzeigen einer Führung durchzuführen, die ein Bedienverfahren zum Sichern eines Passworts in einem Clipboard angibt, wobei das Passwort durch ein von dem vorbestimmten Anwendungsprogramm verschiedenes anderes Anwendungsprogramm verwaltet wird und ein Passwort zum Verbinden mit einem Zugangspunkt außerhalb der Informationsverarbeitungsvorrichtung (101) ist, und
einer Übertragungssteuereinrichtung (103), die eingerichtet ist, durch das vorbestimmte Anwendungsprogramm eine Steuerung zum Übertragen von Einstellungsinformationen, die ein beschafftes Passwort enthalten, zum Verbinden mit einem Zugangspunkt außerhalb der Informationsverarbeitungsvorrichtung (101) zu einer Kommunikationsvorrichtung (151) außerhalb der Informationsverarbeitungsvorrichtung (101), nachdem die Führung angezeigt wird, durchzuführen.

22. Vorbestimmtes Anwendungsprogramm, das Instruktionen enthält, die bei Ausführung durch einen oder mehrere Prozessoren einer Informationsverarbeitungsvorrichtung (101) die Informationsverarbeitungsvorrichtung (101) zum Durchführen des Verfahrens nach Anspruch 1 veranlassen.

23. Nichtflüchtiges computerlesbares Speichermedium, das ein vorbestimmtes Anwendungsprogramm speichert, das Instruktionen enthält, die bei Ausführung durch einen oder mehrere Prozessoren einer Informationsverarbeitungsvorrichtung (101) die Informationsverarbeitungsvorrichtung (101) zum Durchführen des Verfahrens nach Anspruch 1 veranlassen.

## Revendications

1. Procédé de commande pour un appareil de traitement d'informations (101) incluant un programme d'application prédéterminé, comprenant :
la réalisation, par le programme d'application prédéterminé, d'une commande pour afficher des conseils indiquant un mode opératoire pour la sauvegarde, dans un presse-papiers, d'un mot de passe qui est géré par un autre programme d'application différent du programme d'application prédéterminé et est un mot de passe pour la connexion à un point d'accès à l'extérieur de l'appareil de traitement d'informations (101) ; et
la réalisation, par le programme d'application prédéterminé, d'une commande pour transmettre, à un appareil de communication (151) à l'extérieur de l'appareil de traitement d'informations (101), des informations de réglage, incluant un mot de passe acquis, pour une connexion à un point d'accès à l'extérieur de l'appareil de traitement d'informations (101), après que les conseils ont été affichés.

2. Procédé selon la revendication 1, comprenant en outre la réalisation, par le programme d'application prédéterminé, d'une commande pour déterminer si un système d'exploitation de l'appareil de traitement d'informations (101) est un système d'exploitation prenant en charge une fonction de sauvegarde, dans le presse-papiers, d'un mot de passe qui est géré par l'autre programme d'application et est un mot de passe pour la connexion à un point d'accès à l'extérieur de l'appareil de traitement d'informations (101),
dans lequel, sur la base du fait que le système d'exploitation de l'appareil de traitement d'informations (101) est un système d'exploitation prenant en charge la fonction de sauvegarde, les conseils sont affichés par le programme d'application prédéterminé.

3. Procédé selon la revendication 2, dans lequel, sur la base du fait que le système d'exploitation de l'appareil de traitement d'informations (101) n'est pas un système d'exploitation prenant en charge la fonction de sauvegarde, une commande est exécutée de sorte que les conseils ne soient pas affichés par le programme d'application prédéterminé.

4. Procédé selon la revendication 3, dans lequel, sur la base du fait que le système d'exploitation de l'appareil de traitement d'informations (101) n'est pas un système d'exploitation prenant en charge la fonction de sauvegarde, une commande est exécutée de sorte qu'un écran de saisie pour l'acceptation d'un mot de passe saisi par l'utilisateur soit affiché par le programme d'application prédéterminé sans affichage des conseils par le programme d'application prédéterminé.

5. Procédé selon la revendication 2, dans lequel le système d'exploitation prenant en charge la fonction de sauvegarde est iOS dont la version n'est pas antérieure à iOS 16.

6. Procédé selon la revendication 1, comprenant en outre la réalisation, par le programme d'application prédéterminé, d'une commande pour accepter, de l'utilisateur, une sélection d'un point d'accès parmi une pluralité de points d'accès,
dans lequel dans le cas où la sélection est acceptée de l'utilisateur, les conseils sont affichés, et
les informations de réglage transmises à l'appareil de communication (151) sont des informations pour une connexion au point d'accès sélectionné.

7. Procédé selon la revendication 6, comprenant en outre la réalisation, par le programme d'application prédéterminé, d'une commande pour acquérir, auprès de l'appareil de communication (151), des informations d'une liste des points d'accès trouvés par une recherche exécutée par l'appareil de communication (151),
dans lequel la sélection est une sélection d'un point d'accès dans la liste des points d'accès trouvés par la recherche exécutée par l'appareil de communication (151).

8. Procédé selon la revendication 1, dans lequel, sur la base du fait que l'utilisateur exécute une opération prédéterminée après que les conseils ont été affichés, une commande est exécutée de sorte qu'un écran de saisie pour l'acceptation d'un mot de passe saisi par l'utilisateur soit affiché par le programme d'application prédéterminé.

9. Procédé selon la revendication 1, comprenant en outre la réalisation, par le programme d'application prédéterminé, d'une commande pour acquérir un mot de passe qui est géré par l'autre programme d'application et est un mot de passe pour la connexion à un point d'accès à l'extérieur de l'appareil de traitement d'informations (101), sauvegardé dans le presse-papiers après que les conseils ont été affichés,
dans lequel les informations de réglage transmises à l'appareil de communication (151) incluent le mot de passe acquis.

10. Procédé selon la revendication 9, dans lequel, sur la base du fait qu'un mot de passe, qui est géré par l'autre programme d'application et est un mot de passe pour la connexion à un point d'accès à l'extérieur de l'appareil de traitement d'informations (101), est sauvegardé dans le presse-papiers par la fonction de sauvegarde après que les conseils ont été affichés, un mot de passe sauvegardé dans le presse-papiers est acquis.

11. Procédé selon la revendication 9, dans lequel, sur la base du fait qu'il existe une différence entre un état du presse-papiers à un premier moment et un état du presse-papiers à un deuxième moment après le premier moment et après que les conseils ont été affichés, un mot de passe sauvegardé dans le presse-papiers est acquis.

12. Procédé selon la revendication 11, dans lequel le premier moment est un moment avant que les conseils soient affichés.

13. Procédé selon n'importe laquelle des revendications 1 à 12, dans lequel les conseils sont un écran pour l'affichage du mode opératoire pour l'exécution de la fonction de sauvegarde qui est exécutée sur un écran affiché par l'autre programme d'application.

14. Procédé selon n'importe laquelle des revendications 1 à 13, dans lequel les conseils incluent un bouton pour l'activation de l'autre programme d'application.

15. Procédé selon n'importe laquelle des revendications 1 à 14, comprenant en outre :
la réalisation, par le programme d'application prédéterminé, d'une commande pour établir une connexion entre le point d'accès et l'appareil de traitement d'informations (101) après que les informations de réglage ont été transmises à l'appareil de communication (151) ;
la réalisation, par le programme d'application prédéterminé, d'une commande pour rechercher l'appareil de communication (151) sur un réseau du point d'accès ; et
la réalisation, par le programme d'application prédéterminé, d'une commande pour afficher, sur la base du fait que l'appareil de communication (151) n'est pas trouvé sur le réseau du point d'accès, un écran correspondant au fait que l'appareil de communication (151) n'est pas trouvé sur le réseau du point d'accès.

16. Procédé selon la revendication 15, dans lequel l'écran correspondant au fait que l'appareil de communication (151) n'est pas trouvé sur le réseau du point d'accès inclut une zone pour l'invitation de l'utilisateur à exécuter la fonction de sauvegarde.

17. Procédé selon n'importe laquelle des revendications 1 à 16, comprenant en outre la réalisation, par le programme d'application prédéterminé, d'une commande pout transmettre, à l'appareil de communication (151), un travail parmi un travail d'impression destiné à amener l'appareil de communication (151) à exécuter une impression et un travail de numérisation par balayage destiné à amener l'appareil de communication (151) à exécuter une numérisation par balayage, par une communication entre l'appareil de traitement d'informations (101) et l'appareil de communication (151) par l'intermédiaire de la connexion établie par transmission des informations de réglage.

18. Procédé selon n'importe laquelle des revendications 1 à 17, dans lequel l'autre programme d'application est un programme d'application Réglages Système standard de système d'exploitation de l'appareil de traitement d'informations (101).

19. Procédé selon n'importe laquelle des revendications 1 à 18, dans lequel, dans le cas où un mot de passe sauvegardé dans le presse-papiers est acquis, les informations de réglage incluant le mot de passe acquis sont transmises à l'appareil de communication (151) à l'extérieur de l'appareil de traitement d'informations (101).

20. Procédé selon n'importe laquelle des revendications 1 à 19, comprenant en outre la réalisation, par le programme d'application prédéterminé, d'une commande pour afficher un champ de texte pour l'acceptation, par le programme d'application prédéterminé, d'une saisie d'un mot de passe par un utilisateur,
dans lequel les informations de réglage incluant un mot de passe saisi dans le champ de texte sont transmises à l'appareil de communication (151) à l'extérieur de l'appareil de traitement d'informations.

21. Appareil de traitement d'informations (101) incluant un programme d'application prédéterminé, comprenant :
un moyen de commande d'affichage (107) configuré pour réaliser, par le programme d'application prédéterminé, une commande pour afficher des conseils indiquant un mode opératoire pour la sauvegarde, dans un presse-papiers, d'un mot de passe qui est géré par un autre programme d'application différent du programme d'application prédéterminé et est un mot de passe pour la connexion à un point d'accès à l'extérieur de l'appareil de traitement d'informations (101) ; et
un moyen de commande de transmission (103) configuré pour réaliser, par le programme d'application prédéterminé, une commande pour transmettre, à un appareil de communication (151) à l'extérieur de l'appareil de traitement d'informations (101), des informations de réglage, incluant un mot de passe acquis, pour une connexion à un point d'accès à l'extérieur de l'appareil de traitement d'informations (101), après que les conseils ont été affichés.

22. Programme d'application prédéterminé incluant des instructions qui, lorsqu'elles sont exécutées par un ou plusieurs processeurs d'un appareil de traitement d'informations (101), amènent l'appareil de traitement d'informations (101) à réaliser le procédé de la revendication 1.

23. Support de stockage non transitoire lisible par ordinateur stockant un programme d'application prédéterminé incluant des instructions qui, lorsqu'elles sont exécutées par un ou plusieurs processeurs d'un appareil de traitement d'informations (101), amènent l'appareil de traitement d'informations (101) à réaliser le procédé de la revendication 1.
